(19) Europäisches Patentamt
European Patent Office
Office européen des brevets

(11) **EP 4 506 851 A1**

(12) **EUROPEAN PATENT APPLICATION**
published in accordance with Art. 153(4) EPC

(43) Date of publication:
**12.02.2025 Bulletin 2025/07**

(21) Application number: **23778277.6**

(22) Date of filing: **29.03.2023**

(51) International Patent Classification (IPC):
**G06F 40/35** (2020.01)

(52) Cooperative Patent Classification (CPC):
**G06F 40/35**

(86) International application number:
**PCT/CN2023/084642**

(87) International publication number:
**WO 2023/185912 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.04.2022 CN 202210338218**

(71) Applicants:
• **Beijing Wodong Tianjun Information Technology Co.,
Ltd.
Beijing 100176 (CN)**
• **Beijing Jingdong Century Trading Co., Ltd.
Beijing 100176 (CN)**

(72) Inventors:
• **ZOU, Yanyan
Beijing 100176 (CN)**
• **ZHANG, Hainan
Beijing 100176 (CN)**
• **CHEN, Hongshen
Beijing 100176 (CN)**
• **DING, Zhuoye
Beijing 100176 (CN)**
• **LONG, Bo
Beijing 100176 (CN)**

(74) Representative: **Page White Farrer
Bedford House
21a John Street
London WC1N 2BF (GB)**

(54) **DIALOGUE ABSTRACT GENERATION METHOD AND APPARATUS, AND MODEL TRAINING METHOD AND DEVICE**

(57)    The present disclosure relates to a conversation abstract generation method and apparatus, and a model training method and device. The conversation abstract generation method comprises: modeling semantic coherence in a comparative learning mode, determining conversation theme information, and generating a conversation abstract generation model; and inputting target conversation content into the conversation abstract generation model to obtain abstract information of the target conversation content. According to the present disclosure, the theme information of the conversation content can be implicitly learned, abstract generation is carried out for different themes, and additional labeling is not needed.

```
┌─────────────────────────────────────────────┐
│ Modeling semantic coherence of the dialogue │
│ sentences by a contrastive learning mode to │ ─── 100
│ determine topic information of the dialogue  │
│ and generate a model for generating a        │
│ summary of the dialogue                      │
└─────────────────────────────────────────────┘
                      │
                      ▼
┌─────────────────────────────────────────────┐
│ Inputting a target dialogue into the model   │
│ for generating the summary of the dialogue   │ ─── 200
│ to obtain the summary of the target dialogue │
└─────────────────────────────────────────────┘
```

Fig. 1

Processed by Luminess, 75001 PARIS (FR)

**Description**

**CROSS-REFERENCE TO RELATED APPLICATIONS**

The present application is based on and claims priority to China Patent Application No. 202210338218.2 filed on April 1, 2022, the disclosure of which is incorporated by reference herein in its entirety.

**TECHNICAL FIELD**

The present disclosure relates to the field of dialogue summary generation, in particular to a method and apparatus for generating a summary of a dialogue, and a method and device for training a model.

**BACKGROUND**

Online communication has become an indispensable communication means in our daily work and life. In the era of information explosion, it is foremost to present the most prominent facts in a dialogue content, rather than redundant discourses, which is very useful for online customer service and meeting summary. Given the content of a segment of dialogue, the generated dialogue summary is intended to summarize and reiterate the content of the dialogue and only present the important content of the dialogue.

**SUMMARY**

According to one aspect of the present disclosure, a method for generating a summary of a dialogue is provided. The method comprises: modeling semantic coherence of dialogue sentences by a contrastive learning mode to determine topic information of the dialogue and generate a model for generating the summary of the dialogue; and inputting a target dialogue into the model for generating the summary of the dialogue to obtain the summary of the target dialogue.

In some embodiments of the present disclosure, the modeling the semantic coherence of dialogue sentences by the contrastive learning mode to determine the topic information of the dialogue and generate the model for generating the summary of the dialogue, comprises: constructing a model for detecting the semantic coherence of the dialogue sentences, to model a switching relationship between different topics in the dialogue by learning the semantic coherence of dialogue sentences to obtain topic segmentation information of the dialogue; constructing a model for generating a sub-summary, to generate a sub-summary corresponding to each of topics of the dialogue; and constructing a model for generating a full-text summary, to generate a summary of full-text of the dialogue.

In some embodiments of the present disclosure, the modeling the semantic coherence of dialogue sentences by the contrastive learning mode to determine the topic information of the dialogue and generate the model for generating the summary of the dialogue, further comprises: performing model training on the model for detecting the semantic coherence of the dialogue sentences, the model for generating the sub-summary and the model for generating the full-text summary by using an alternating parameter updating mode.

In some embodiments of the present disclosure, the performing model training on the model for detecting the semantic coherence of the dialogue sentences, the model for generating the sub-summary and the model for generating the full-text summary by using an alternating parameter updating mode, comprises that: sequentially updating an objective function of the model for detecting the semantic coherence of the dialogue sentences, an objective function of the model for generating the sub-summary and an objective function of the model for generating the full-text summary, to train the model for detecting the semantic coherence of the dialogue sentences, the model for generating the sub-summary and the model for generating the full-text summary by using an alternating parameter updating mode in a training process; and taking the model for detecting the semantic coherence of the dialogue sentences and the model for generating the sub-summary as auxiliary tasks to improve the quality of generating the summary by the model for generating the full-text summary in the training process.

In some embodiments of the present disclosure, the modeling the semantic coherence of dialogue sentences by the contrastive learning mode to determine the topic information of the dialogue and generate the model for generating the summary of the dialogue, further comprises: pre-processing the dialogue; constructing corresponding model training data according to requirements of a model for understanding the dialogue, the model for generating the sub-summary and the model for generating the full-text summary; and constructing the model for understanding the dialogue, to semantically encode the dialogue; and training the model for understanding the dialogue.

In some embodiments of the present disclosure, the pre-processing the dialogue, comprises: adding speaker information to each of speech contents of different speakers in the dialogue, and splicing the speech contents of the different speakers together; and tokenizing the spliced dialogue by using a tokenizer of a pre-training model, and reserving a first predetermined number of words as a model input.

In some embodiments of the present disclosure, the constructing the corresponding model training data according to the requirements of the model for understanding the dialogue, the model for generating the sub-summary and the model for generating the full-text summary, comprises: taking a window constructed according to consecutive dialogue sentences in the dialogue as positive model training data, and taking data obtained by scrambling and splicing again dialogue sentences in window content as negative model training data, for the model for understanding the dialogue; generating corresponding positive model training data and negative model training data according to each topic of the dialogue, for the model for generating the sub-summary; and taking all content of the dialogue as a model input, and taking a complete summary as a model output, for the model for generating the full-text summary.

In some embodiments of the present disclosure, the constructing the mode for detecting the coherence of the dialogue sentences, to model a switching relationship between different topics in the dialogue by learning the semantic coherence of dialogue sentences to obtain topic segmentation information of the dialogue, comprises: calculating coherence scores of the positive model training data and the negative model training data of the mode for detecting the coherence of the dialogue sentences respectively; randomly selecting a second predetermined number of predetermined positive and negative pairs, and calculating a coherence loss based on contrastive learning in a training stage; and calculating an objective function of the mode for detecting the coherence of the dialogue sentences according to an edge contrastive loss.

In some embodiments of the present disclosure, the constructing the model for generating the sub-summary, to generate the sub-summary corresponding to each of the topics of the dialogue, comprises: modeling a sub-summary generation task as a sequence-to-sequence learning problem; determining the degree of irrelevance between a dialogue segment and a sub-summary in the sub-summary generation task; randomly selecting a third predetermined number of predetermined positive and negative pairs for training in a training stage; and determining an objective function of the model for generating the sub-summary according to a marginal loss function based on contrastive learning.

In some embodiments of the present disclosure, the constructing a model for generating a full-text summary, to generate the summary of the full-text of the dialogue, comprises: modeling a full-text summary generation task as a sequence-to-sequence learning problem; setting a training goal of the model for generating the full-text summary to learn an optimal model parameter and minimize a negative logarithmic likelihood function value; and determining an objective function of the model for generating the full-text summary.

According to another aspect of the present disclosure, a method for training a model is provided. The method comprises: modeling semantic coherence of dialogue sentences by a contrastive learning mode to determine topic information of the dialogue and generate a model for generating a summary of the dialogue; and performing model training on the model for generating the summary of the dialogue by using an alternating parameter updating mode, so that the model for generating the summary of the dialogue outputs the summary of a target dialogue according to an input target dialogue.

In some embodiments of the present disclosure, the modeling the semantic coherence of dialogue sentences by the contrastive learning mode to determine the topic information of the dialogue and generate the model for generating the summary of the dialogue, comprises: constructing a model for detecting the semantic coherence of the dialogue sentences, to model a switching relationship between different topics in the dialogue by learning the semantic coherence of dialogue sentences to obtain topic segmentation information of the dialogue; constructing a model for generating a sub-summary, to generate a sub-summary corresponding to each of topics of the dialogue; and constructing a model for generating a full-text summary, to generate a summary of full-text of the dialogue.

In some embodiments of the present disclosure, the performing model training on the model for generating the summary of the dialogue by using an alternating parameter updating mode, comprises: sequentially updating an objective function of the model for detecting the semantic coherence of the dialogue sentences, an objective function of the model for generating the sub-summary and an objective function of the model for generating the full-text summary, to train the model for detecting the semantic coherence of the dialogue sentences, the model for generating the sub-summary and the model for generating the full-text summary by using an alternating parameter updating mode in a training process; and taking the model for detecting the semantic coherence of the dialogue sentences and the model for generating the sub-summary as auxiliary tasks to improve the quality of generating the summary by the model for generating the full-text summary in the training process.

In some embodiments of the present disclosure, the modeling the semantic coherence of dialogue sentences by the contrastive learning mode to determine the topic information of the dialogue and generate the model for generating the summary of the dialogue, further comprises: pre-processing the dialogue; constructing corresponding model training data according to requirements of a model for understanding the dialogue, the model for generating the sub-summary and the model for generating the full-text summary; and constructing the model for understanding the dialogue, to semantically encode the dialogue; and training the model for understanding the dialogue.

In some embodiments of the present disclosure, the pre-processing the dialogue, comprises: adding speaker information to each of speech contents of different speakers in the dialogue, and splicing the speech contents of the different speakers together; and tokenizing the spliced dialogue by using a tokenizer of a pre-training model, and reserving a first predetermined number of words as a model input.

In some embodiments of the present disclosure, the constructing the corresponding model training data according to the requirements of the model for understanding the dialogue, the model for generating the sub-summary and the model for generating the full-text summary, comprises: taking a window constructed according to consecutive dialogue sentences in the dialogue as positive model training data, and taking data obtained by scrambling and splicing again dialogue sentences in window content as negative model training data, for the model for understanding the dialogue; generating corresponding positive model training data and negative model training data according to each topic of the dialogue, for the model for generating the sub-summary; and taking all content of the dialogue as a model input, and taking a complete summary as a model output, for the model for generating the full-text summary.

In some embodiments of the present disclosure, the constructing the mode for detecting the coherence of the dialogue sentences, to model a switching relationship between different topics in the dialogue by learning the semantic coherence of dialogue sentences to obtain topic segmentation information of the dialogue, comprises: calculating coherence scores of the positive model training data and the negative model training data of the mode for detecting the coherence of the dialogue sentences respectively; randomly selecting a second predetermined number of predetermined positive and negative pairs, and calculating a coherence loss based on contrastive learning in a training stage; and calculating an objective function of the mode for detecting the coherence of the dialogue sentences according to an edge contrastive loss.

In some embodiments of the present disclosure, the constructing the model for generating the sub-summary, to generate the sub-summary corresponding to each of the topics of the dialogue, comprises: modeling a sub-summary generation task as a sequence-to-sequence learning problem; determining the degree of irrelevance between a dialogue segment and a sub-summary in the sub-summary generation task; randomly selecting a third predetermined number of predetermined positive and negative pairs for training in a training stage; and determining an objective function of the model for generating the sub-summary according to a marginal loss function based on contrastive learning.

In some embodiments of the present disclosure, the constructing a model for generating a full-text summary, to generate the summary of the full-text of the dialogue, comprises: modeling a full-text summary generation task as a sequence-to-sequence learning problem; setting a training goal of the model for generating the full-text summary to learn an optimal model parameter and minimize a negative logarithmic likelihood function value; and determining an objective function of the model for generating the full-text summary.

According to another aspect of the present disclosure, an apparatus for generating a summary of a dialogue is provided. The apparatus comprises: a model generating module configured to model semantic coherence of dialogue sentences by a contrastive learning mode to determine topic information of the dialogue and generate a model for generating the summary of the dialogue; and a dialogue summary determination module configured to input a target dialogue into the model for generating the summary of the dialogue to obtain the summary of the target dialogue.

In some embodiments of the present disclosure, the apparatus is configured to perform the method according to any of the above-described embodiments.

According to another aspect of the present disclosure, a device for training a model is provided. The device comprises: a model generation unit configured to model semantic coherence of dialogue sentences by a contrastive learning mode to determine topic information of the dialogue and generate a model for generating a summary of the dialogue; and a model training unit configured to perform model training on the model for generating the summary of the dialogue by using an alternating parameter updating mode, so that the model for generating the summary of the dialogue outputs the summary of a target dialogue according to an input target dialogue.

In some embodiments of the present disclosure, the device is configured to perform the method according to any of the above-described embodiments.

According to another aspect of the present disclosure, a computer device is provided. The device comprises: a memory configured to store instructions; and a processor configured to execute the instructions, so that the computer device performs the method for generating a summary of a dialogue according to any of the above-described embodiments and/or the method for training a model according to any of the above-described embodiments.

According to another aspect of the present disclosure, a non-transitory computer-readable storage medium is provided. Wherein, the non-transitory computer-readable storage medium has computer instructions stored thereon that, when executed by a processor, implement the method for generating a summary of a dialogue according to any of the above-described embodiments and/or the method for training a model according to any of the above-described embodiments.

## BRIEF DESCRIPTION OF THE DRAWINGS

In order to more explicitly explain the technical solutions in the embodiments of the present disclosure or the relevant art, a brief introduction will be given below for the accompanying drawings required to be used in the description of the embodiments or the relevant art. It is obvious that, the accompanying drawings described as follows are merely some of the embodiments of the present disclosure. For those skilled in the art, other accompanying drawings may also be obtained according to such accompanying drawings on the premise that no inventive effort is involved.

Fig. 1 is a schematic view of some embodiments of a method for generating a summary of a dialogue according to the present disclosure.

Fig. 2 is a schematic view of a dialogue and a summary in some embodiments of the present disclosure.

Fig. 3 is a schematic view of some embodiments of a method for training a model according to the present disclosure.

Fig. 4 is a schematic view of other embodiments of a method for training a model according to the present disclosure.

Fig. 5 is a schematic view of some embodiments of an apparatus for generating the summary of the dialogue according to the present disclosure.

Fig. 6 is a schematic view of some embodiments of a device for training a model according to the present disclosure.

Fig. 7 is a schematic view of other embodiments of a device for training a model according to the present disclosure.

Fig. 8 is a schematic structural view of some embodiments of a computer device according to the present disclosure.

## DETAILED DESCRIPTION

The technical solution in the embodiments of the present disclosure will be explicitly and completely described below in conjunction with the accompanying drawings in the embodiments of the present disclosure. Apparently, the embodiments described are merely some of the embodiments of the present disclosure, rather than all of the embodiments. The following descriptions of at least one exemplary embodiment which are in fact merely illustrative, shall by no means serve as any delimitation on the present disclosure as well as its application or use. On the basis of the embodiments of the present disclosure, all the other embodiments obtained by those skilled in the art on the premise that no inventive effort is involved shall fall into the protection scope of the present disclosure.

Unless otherwise specified, the relative arrangements, numerical expressions and numerical values of the components and steps expounded in these examples shall not limit the scope of the present invention.

At the same time, it should be understood that, for ease of description, the dimensions of various parts shown in the accompanying drawings are not drawn according to actual proportional relations.

The techniques, methods, and apparatuses known to those of ordinary skill in the relevant art might not be discussed in detail. However, the techniques, methods, and apparatuses shall be considered as a part of the granted description where appropriate.

Among all the examples shown and discussed here, any specific value shall be construed as being merely exemplary, rather than as being restrictive. Thus, other examples in the exemplary embodiments may have different values.

It is to be noted that: similar reference signs and letters present similar items in the following accompanying drawings, and therefore, once an item is defined in one accompanying drawing, it is necessary to make further discussion on the same in the subsequent accompanying drawings.

The inventors have found through studies that the challenge of dialogue summary is attempted to be solved by using the internal information of a dialogue in the related art, for example, a topic characteristic of a dialogue (that is, a topic), a dialogue act and a dialogue stage. Although the model has proved the effectiveness of the dialogue-related information in terms of generating a dialogue summary, there are still the following problems: the method often requires additional manual annotation or prior algorithms to obtain information such as dialogue topic characteristics and dialogue acts, which is likely to consume a lot of labor and machine resources.

The inventors have also found through studies that the results of the upstream prior algorithms and even the expert annotation in the related art might be erroneous. This pipeline method of first obtaining the relevant information of a dialogue and then generating a dialogue summary may result in the transfer of an upstream mistake, which affects the effect of a downstream dialogue summary model.

In view of at least one of the above technical problems, the present disclosure provides a method and apparatus for generating a summary of a dialogue and a method and device for training a model, which can implicitly learn the topic information of a dialogue content and generate a summary for different topics. The present disclosure will be explained below by specific embodiments.

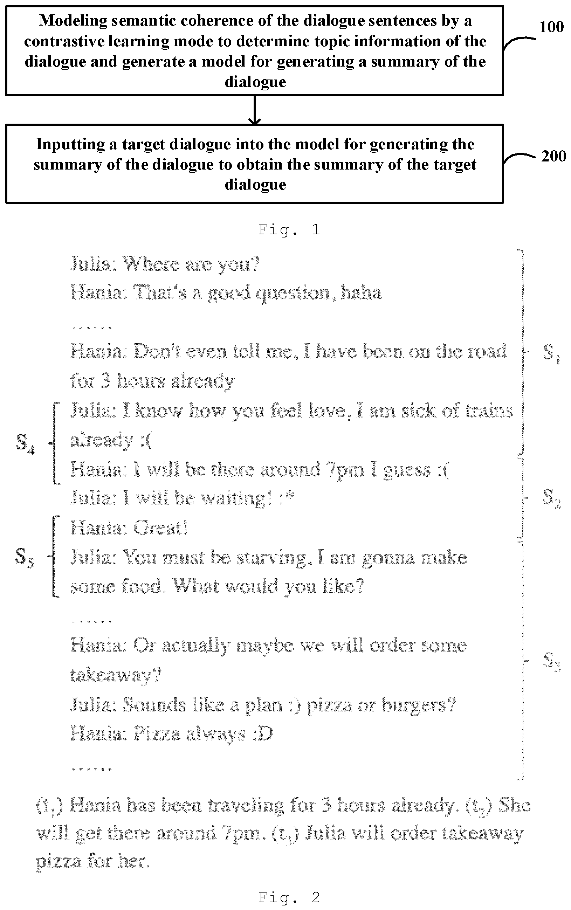

Fig. 1 is a schematic view of some embodiments of a method for generating a summary of a dialogue according to the present disclosure. Preferably, the present embodiment may be performed by the apparatus for generating the summary of the dialogue according to the present disclosure or the computer device according to the present disclosure. The method may comprise at least one of the following steps.

In Step 100, the semantic coherence of dialogue sentences is modeled by a contrastive learning mode to determine the topic information of the dialogue and generate a model for generating the summary of the dialogue, wherein the dialogue may be a conversation.

In Step 200, a target dialogue is input into the model for generating the summary of the dialogue to obtain the summary information of the target dialogue, wherein the dialogue comprises a dialogue content.

Fig. 2 is a schematic view of a dialogue content and a summary in some embodiments of the present disclosure. As shown in Fig. 2, the dialogue content has three topics in total, and the corresponding topic segments are marked with $S_1$, $S_2$ and $S_3$ respectively. $S_1$ is "current situation" (lines 1 to 7 of Fig. 2), $S_2$ is "arrival time" (lines 8 to 10 of Fig. 2), and $S_3$ is "food to eat" (lines 11 to 18 of Fig. 2). Lines 19 to 21 of Fig. 2 present a summary of each topic, and the main idea of each topic is summarized in one sentence, that is, $t_1$ represents the summary of $S_1$, $t_2$ represents the summary of $S_2$, and $t_3$ represents the summary of $S_3$.

As shown in Fig. 2, sentences from the same topic (for example, a dialogue in $S_1$, $S_2$ or $S_3$) are more coherent than sentences from different topics (for example, inter-topic segments $S_4$ or $S_5$). This reveals a potential relationship between the topic and the sentence coherence. Different from a structured text in which paragraphs or parts may be regarded as natural topic paragraphs, it is difficult to accurately divide dialogue topics. Based on an internal relationship between the topic and the discourse coherence, the above-described embodiments of the present disclosure provide that the discourse coherence is modeled by a contrastive learning mode to implicitly capture the dialogue topic information. In the above-described embodiments of the present disclosure, a model for detecting the semantic coherence of the dialogue sentences is constructed to push the model to attach more attention to segments that are more coherent and might contain prominent information from the same topic.

In addition, since the above-described embodiments of the present disclosure aim to generate a better summary for each topic in a dialogue, a model for generating a sub-summary is introduced, which may identify the most prominent information and generate a corresponding summary by the model.

The present disclosure can implicitly learn the topic information of a dialogue content, and generate summaries according to different topics without additional annotation.

These two modules in the above-described embodiments of the present disclosure are both constructed by a contrastive learning mode without additional manual annotation or additional algorithm. These two modules in the above-described embodiments of the present disclosure may be combined with a full-text dialogue summary task through an alternate parameter updating strategy, so as to form a final model of the present disclosure.

In some embodiments of the present disclosure, Step 100 in the embodiment of Fig. 1 may comprise: a method for training a model. That is, model training is performed on the model for generating the summary of the dialogue by using an alternating parameter updating mode.

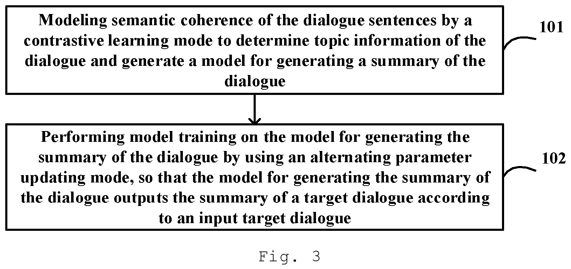

Fig. 3 is a schematic view of some embodiments of a method for training a model according to the present disclosure. Preferably, the present embodiment may be performed by a device for training a model according to the present disclosure, an apparatus for generating the summary of the dialogue according to the present disclosure or a computer device according to the present disclosure. As shown in Fig. 3, the method for training a model according to the present disclosure or the method for generating the summary of the dialogue according to the present disclosure (for example, Step 100 in the embodiment of Fig. 1) may comprise at least one of Steps 101 to 102.

In Step 101, the semantic coherence of dialogue sentences is modeled by a contrastive learning mode to determine the topic information of the dialogue and generate a model for generating the summary of the dialogue.

In Step 102, model training is performed on the model for generating the summary of the dialogue by using an alternating parameter updating mode, so that the model for generating the summary of the dialogue outputs the summary of a target dialogue according to an input target dialogue.

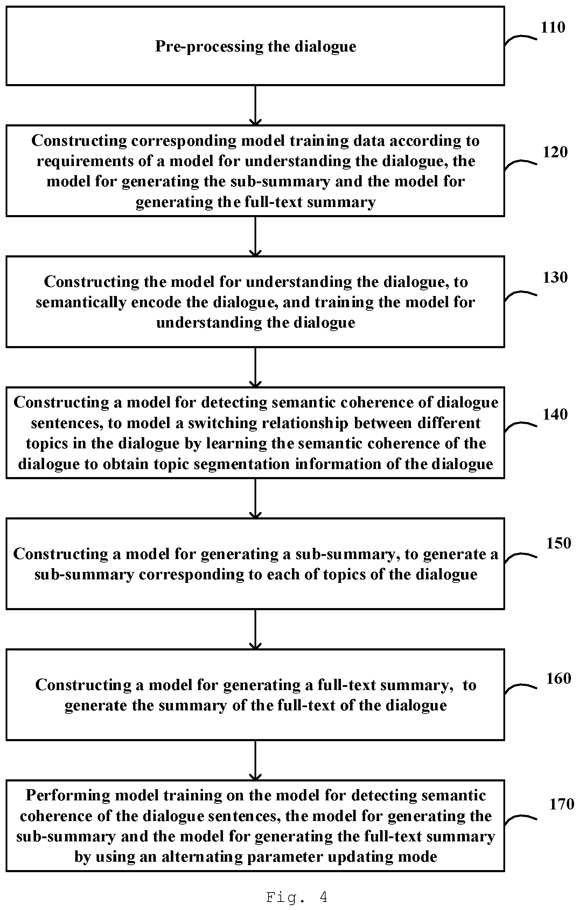

Fig. 4 is a schematic view of other embodiments of a method for training a model according to the present disclosure. Preferably, the present embodiment may be performed by a device for training a model according to the present disclosure, an apparatus for generating the summary of the dialogue according to the present disclosure or a computer device according to the present disclosure. As shown in Fig. 4, the method for training a model according to the present disclosure or the method for generating the summary of the dialogue according to the present disclosure (for example, Step 100 in the embodiment of Fig. 1) may comprise at least one of steps 110 to 170.

In Step 110, a dialogue content is pre-processed.

In some embodiments of the present disclosure, as shown in Fig. 2, the training data of a dialogue summary generation task comprises two parts, that is, a dialogue content and its corresponding summary. In Step 110, a dialogue content is mainly pre-processed.

In some embodiments of the present disclosure, Step 110 may comprise at least one of Steps 111 to 112.

In Step 111, the speaker information is added to each of speech contents of different speakers in the dialogue content, and the speech contents of the different speakers are spliced together.

Description will be made by taking the first two sentences of the dialogue in Fig. 2 as an example. The speaker "Julia" of the sentence "Where are you?" is added before the sentence, indicating that the sentence is said by Julia, to obtain "Julia: Where are you?" . The speaker "Hania" is added before the sentence "That's a good question, haha" , to obtain "Hania: that's a good question, haha" . The two sentences are spliced to obtain "Julia: Where are you? Hania: That's a good question, haha" .

In Step 112, the spliced dialogue content is tokenized by a tokenizer of a pre-training model, and a first predetermined number of words are reserved as a model input.

In some embodiments of the present disclosure, the tokenizer of the pre-training model may be Bart (Bidirectional and Auto-regressive Transformers).

In some embodiments of the present disclosure, the pre-training model may be BART, STEP, Pegasus (Pre-training with Extracted Gap-sentences for Abstractive Summarization) and other models.

In some embodiments of the present disclosure, the first predetermined number of words may be the first 1024 words.

In Step 120, different forms of model training data are constructed correspondingly according to the requirements of the model for understanding the dialogue, the model for generating the sub-summary and the model for generating the full-text summary.

In some embodiments of the present disclosure, Step 120 may comprise at least one of Steps 121 to 123.

In Step 121, for the model for understanding the dialogue content, a window constructed according to consecutive dialogue sentences in the dialogue is taken as the positive model training data, and data obtained by scrambling and splicing again dialogue sentences in window content is taken as the negative model training data.

In some embodiments of the present disclosure, in Step 121, the model for understanding the dialogue content, the training data is constructed according to the dialogue content, without involving a summary part.

In some embodiments of the present disclosure, Step 121 may comprise: taking a window w constructed by k consecutive dialogue sentences as a positive, and scrambling and splicing again sentences in the window was a negative. Taking a dialogue in Fig. 2 as an example, it is possible to select a window "Hania: I will be there around 7pm I guess: (Julia: I will be waiting!:* Hania: Great!" which contains three consecutive dialogue sentences as a positive, and scramble and splice again sentences in the window to obtain "Hania: Great! Hania: I will be there around 7pm I guess: (Julia: I will be waiting!:*", so that the newly obtained sentence window is taken as a negative.

In Step 122, for the model for generating the sub-summary, corresponding positive model training data and negative model training data are generated for each topic of the dialogue content.

In some embodiments of the present disclosure, Step 122 may comprise: constructing training data together by joining a dialogue content and a dialogue summary according to the model for generating the sub-summary. The summary of a long dialogue always consists of multiple sentences, each of which is regarded as a sub-summary. Considering that a dialogue may contain multiple topics, in the present disclosure, it is assumed that each sub-summary is related to a topic. The whole summary is divided into single sentences by sentence terminators (such as periods, question marks, exclamation marks, etc.), and each single sentence is a sub-summary.

In some embodiments of the present disclosure, for the convenience of description, given a segment of dialogue D=(u1,u2,...,u|D|), in the present disclosure, a corresponding target summary of this dialogue is presented here as TD= (t1,t2,...,tm), where each ti is a sub-summary, m is the number of sub-summaries, and |D| presents the number of sentences contained in a dialogue. Given a sub-summary, in the present disclosure, the most relevant segment Sipos may be retrieved from a dialogue D according to a ROUGE-2 recall score. Specifically, given an integer window size w∈[a, b] (0< a≤ b<|d|, where a and b are hyperparameters), it is possible to slide the window across the dialogue D, and slide the window from left to right by taking half a window size w/2 as a step size and obtain a collection W of candidate collection segments. Each candidate segment in the collection W is enumerated, and a ROUGE-2 recall score is calculated for the each candidate segment and a sub-summary. In this way, it is possible to obtain a dialogue segment with the highest score, which is selected as the most relevant segment of the sub-summary ti and used as a positive sample Sipos. A corresponding negative is randomly selected from the remaining candidates in the collection W, which is presented as Sineg.

In some embodiments of the present disclosure, in the present disclosure, training data {(Sipos,ti), (Sineg,ti)} has been constructed. For the sake of simplicity, description will be made by taking S2 and t2 parts in the dialogue in Fig. 2 as an example, that is, the dialogue D={Hania: I will be there around 7pm I guess: (Julia: I will be waiting!:* Hania: Great.}, and |D| is 3. In the present disclosure, if it is selected that the window size is w=2 and the step size is w/2=1, then the candidate collection W contains two candidates, that is a first candidate 1 "Hania: I will be there around 7pm I guess: (Julia: I will be waiting!:*", and a second candidate 2 "Julia: I will be waiting!:* Hania: Great.". For a sub-summary $t_2$ "She will get there around 7pm." marked at the bottom of Fig. 2, it is obtained that the first candidate 1 and its sub-summary have the highest score by using a ROUGE-2 recall score, which is selected as a positive. Moreover, the second candidate 2 serves as a negative. In other words, the dialogue having the highest ROUGE score with this sub-summary is the part "Hania: I will be there around 7pm I guess: (Julia: I will be waiting!:* Hania: Great!" marked in the figure. On such basis, the dialogue of the first candidate 1 (as a model input) and its corresponding sub-summary (as a model input) constitute the positive training data. In order to construct negative training data, it is only necessary to randomly choose another dialogue window as a model input, and the sub-summary is still a model output. Description will be made by still taking a dialogue in Fig. 2 as an example. With a dialogue "Julia: Where are you ... Julia: I know how you feel love, I am sick of trains already: (" as a model input, and the sub-summary "She will get there around 7pm." as a model output, this combination of an input and an output constitutes the negative training data.

In some embodiments of the present disclosure, Step 122 may comprise: selecting a Rouge-2 recall score to match a sub-summary and a dialogue window in the case where the training data constructing module constructs training data for the sub-summary generating module.

In some embodiments of the present disclosure, the Rouge-2 recall score using an automatic summarization evaluation mode may be replaced by a recall score using a BertScore mode.

In Step 123, for the model for generating the full-text summary, all the content of the dialogue is taken as a model input, and a complete summary is taken as a model output.

Taking the dialogue in Fig. 2 as an example, all the content of the dialogue "Julia: Where are you ... Hania: Pizza always: D..." is taken as an input, and the dialogue summary "Hania has been... pizza for her." composed of three sentence summaries is taken as an output.

In Step 130, a model for understanding the dialogue is constructed to semantically encode the dialogue content, and the model for understanding the dialogue is trained.

In some embodiments of the present disclosure, Step 130 may comprise: encoding the dialogue content into a semantic vector by using a network structure of Transformer encoder of BART. For example, given the content of a segment of dialogue D (obtained by the training data constructing module), in Step 130, the dialogue will be understood and the semantic representation vector E of the dialogue will be output.

In Step 140, a model for detecting the semantic coherence of the dialogue sentences is constructed to model a switching relationship between different topics in the dialogue by learning the semantic coherence of dialogue sentences to obtain topic segmentation information of the dialogue.

In some embodiments of the present disclosure, the model for detecting the semantic coherence of the dialogue sentences is configured to detect the semantic coherence of a dialogue within the input dialogue content window.

In some embodiments of the present disclosure, Step 140 may comprise at least one of Steps 141 to 143.

In Step 141, the coherence scores of the positive model training data and the negative model training data of the mode for detecting the coherence of the dialogue sentences are calculated respectively.

In some embodiments of the present disclosure, Step 141 may comprise: according to the model for detecting the semantic coherence of the dialogue sentences, Step 120 and Step 130 may comprise: constructing a positive Spos and a negative Sneg based on an original dialogue content; inputting the positive and negative data into a dialogue understanding module to obtain respective semantic vector representations, which are marked as $E_{pos}^c$ and $E_{neg}^c$ respectively, as shown in the formula (1). Then, by way of the formula (2), it is possible to calculate respective coherence scores co, and calculate a normalized coherence score of the positive and the negative.

$$y_{E_{pos}^c} = w_1 * E_{pos}^c + b_1; \; y_{E_{neg}^c} = w_1 * E_{neg}^c + b_1 \qquad (1)$$

$$\left[co\left(E_{pos}^c\right), co\left(E_{neg}^c\right)\right] = \text{softmax}\left(\left[y_{E_{pos}^c}, y_{E_{neg}^c}\right]\right) \qquad (2)$$

In the formula (1), $w_1$, $b_1$ are both model parameters. In the above-described embodiments of the present disclosure, the relevance scores of the positive and the negative may be calculated by way of the formula (2), in which a normalized coherence score of the positive and the negative is calculated by using a normalized characteristic of softmax.

In Step 142, a second predetermined number of predetermined positive and negative pairs are randomly selected, and a coherence loss is calculated based on contrastive learning.

In some embodiments of the present disclosure, the second predetermined number may be $N_{co}$.

In some embodiments of the present disclosure, Step 142 may comprise: randomly selecting $N_{co}$ positive and negative pairs for a dialogue D during model training for the sake of simplicity. Then, a coherence loss value $L_{co}^D$ is calculated based on contrastive learning, as shown in the formula (3).

$$L_{co}^D = \frac{1}{N_{co}} \sum_{n=1}^{N_{co}} \max\left(0, 9\delta_{co} - \left(co\left(E_{pos}^c\right) - co\left(E_{neg}^c\right)\right)\right) \qquad (3)$$

In the formula (3), $\delta_{co}$ is a marginal coefficient, and in the present disclosure, it is desirable that the coherence score of a positive segment is greater than that of a negative segment. k, $N_{co}$ and $\delta_{co}$ are all hyperparameters.

In Step 143, an objective function of the mode for detecting the coherence of the dialogue sentences is calculated based on an edge contrastive loss.

In some embodiments of the present disclosure, Step 143 may comprise: given a batch of data, B=(< **D1, T$_{D1}$** >, < D2, **T$_{D1}$** >, ..., < D|B|, **T$_{D|B|}$** >), where Di is the i-th dialogue, T$_{Di}$ is a summary corresponding to Di, and |B| is the number of data in this batch. The objective function based on an edge contrast loss calculated by the dialogue sentence coherence module is shown in the formula (4).

$$L_{co}^B = \frac{1}{|B|} \Sigma_{<D,T_D>\in B} 10 L_{co} \qquad (4)$$

In Step 150, the model for generating the sub-summary is constructed to generate a corresponding sub-summary for each topic of the dialogue.

In some embodiments of the present disclosure, Step 150 may comprise at least one of Steps 151 to 154.

In Step 151, the sub-summary generation task is modeled as a sequence-to-sequence learning problem.

In some embodiments of the present disclosure, Step 151 may comprise: determining a negative log-likelihood value in the case of positive and negative inputs according to the formula (5) and the formula (6).

$$L_{pos}^{t_i} = -\log(\prod_{j=1}^{|t_i|} p(t_j^i | t_{1:j-1}^i, S_{pos}^i; \theta)) \qquad (5)$$

$$L_{neg}^{t_i} = -\log(\prod_{j=1}^{|t_i|} p(t_j^i | t_{1:j-1}^i, S_{neg}^i; \theta)) \qquad (6)$$

In the formula (5) and the formula (6), $t_j^i$ refers to the j-th word in $t_i$ sub-summaries, and $t_{1:j-1}^i$ represents all the words before the position j. $\theta$ represents a model parameter, and $S_{pos}^i$ and $S_{neg}^i$ represent the inputs of a positive and a negative respectively. $p(t_j^i | t_{1:j-1}^i)$ represents the probability of generating $t_j^i$ words on the basis of the first j words. All the j are traversed, all the p probability values are multiplied to obtain the probability of generating a complete $t_i$ sub-summary, and then a negative log is taken to obtain a negative logarithmic loss function L of generating a $t_i$ sub-summary, that is, a negative log-likelihood. For $S_{pos}^i$ and $S_{neg}^i$, it represents a negative logarithmic loss function $L_{pos}^{t_i}$ and $L_{neg}^{t_i}$ of generating a $t_i$ sub-summary in the case where the input is $S_{pos}^i$ or $S_{neg}^i$.

In Step 152, the degree of irrelevance between a dialogue segment and a sub-summary in the sub-summary generation task is determined.

In some embodiments of the present disclosure, Step 152 may comprise: determining the degree of irrelevance between the dialogue segment and the sub-summary according to the formula (7), wherein the normalized score after the softmax layer may be regarded as an irrelevance score, and in the present disclosure, the degree of irrelevance between the dialogue segment and the sub-summary is represented by using a normalized score.

$$su(S_{neg}^i) - su(S_{pos}^i) = softmax([L_{pos}^{t_i} - L_{neg}^{t_i}]) \qquad (7)$$

In Step 153, a third predetermined number of predetermined positive and negative pairs are randomly selected for training in a training stage.

In some embodiments of the present disclosure, Step 153 may comprise: given a dialogue D and its corresponding summary $T_D$, where $T_D$ contains m sub-summaries, at least m pairs of positives and negatives may be constructed as the training data. In order to simplify the calculation process, $N_{su}$ ($N_{su}<m$) is randomly selected in a training stage.

In Step 154, an objective function of the model for generating the sub-summary is determined according to a marginal loss function based on contrastive learning.

In some embodiments of the present disclosure, Step 154 may comprise: constructing a marginal loss function based on contrastive learning for a dialogue D, as shown in the formula (8).

$$L_{su}^{D,T_D} = \frac{1}{N_{su}} \Sigma_{n=1}^{N_{su}} \max(0, 30\,\delta_{su} - (su(S_{neg}^n) - su(S_{pos}^n))) \qquad (8)$$

In the formula (8), $\delta_{su}$ is a marginal coefficient. By way of the coefficient $\delta_{su}$, in the present disclosure, it is desirable that the relevance score between a positive segment and a sub-summary is at least greater than the relevance score between the sub-summary and a negative segment. $N_{su}$ and $\delta_{su}$ are hyperparameters.

In some embodiments of the present disclosure, Step 154 may further comprise: determining a negative log-likelihood objective function according to the formula (9) for a batch of dialogue summary training data B= (< D1, $\mathbf{T_{D1}}$ >, < D2, $\mathbf{T_{D2}}$ >, ..., < D|B|, $\mathbf{T_{D|B|}}$ >), where |B| is the number of data in the batch.

$$L_{su}^{B} = \frac{1}{|B|} \sum_{<D,T_D>\in B} 11 L_{su}^{D,T_D} \qquad (9)$$

In Step 160, the model for generating the full-text summary is constructed to generate a summary of the full-text of the dialogue.

In some embodiments of the present disclosure, the model for generating the full-text summary is configured to use a dialogue and a corresponding full-text summary as training data.

In some embodiments of the present disclosure, Step 160 may comprise at least one of Steps 161 to 163.

In Step 161, the full-text summary generation task is modeled as a sequence-to-sequence learning problem.

In Step 162, the training goal of the model for generating the full-text summary is set to learn an optimal model parameter and minimize a negative log-likelihood function value.

In some embodiments of the present disclosure, Step 162 may comprise: given a dialogue D= (u1,u2,...,u|TD|), consisting of |D| dialogue sentences, which is added with its corresponding summary $T_D$= (y1, y2,...,y1|TD|), consisting of | TD| sub-summaries, the goal of generating a full-text dialogue summary is to learn an optimal model parameter θ and minimize the following negative log-likelihood value, as shown in the formula (10).

$$L^{D,T_D} = \sum_{i=1}^{|T_D|} - \log p(y_i|y_{1:i-1}, D; \theta) \qquad (10)$$

In the formula (10), $\mathbf{y_i|y_{1:i-1}}$ represents the i-1-th annotation of the output sequence (that is, $\mathbf{y_i|y_{1:i-1}}$ = (y1,y2,...,yi-1)) .

In Step 163, an objective function of the model for generating the full-text summary is determined.

In some embodiments of the present disclosure, Step 163 may comprise: for a certain batch of dialogue summary pairs B=( (D1, TD1⟩ , ⟨D2,TD2⟩ ,..., ⟨D|B|,TD|B|⟩), the objective function based on a negative log-likelihood is calculated as shown in the formula (11).

$$L_{main}^{B} = \frac{1}{|B|} \sum_{<D,T_D>\in B} 12 L^{D,T_D} \qquad (11)$$

In Step 170, the model for detecting the semantic coherence of the dialogue sentences, the model for generating the sub-summary and the model for generating the full-text summary are joined by using an alternating parameter updating mode to perform model training.

In some embodiments of the present disclosure, Step 170 may comprise at least one of Steps 171 to 172.

In Step 171, during the training process, parameters are sequentially updated by using an objective function of the model for detecting the semantic coherence of the dialogue sentences, an objective function of the model for generating the sub-summary and an objective function of the model for generating the full-text summary, to train the model for detecting the semantic coherence of the dialogue sentences, the model for generating the sub-summary and the model for generating the full-text summary in a training process.

In Step 172, during the training process, two goals based on contrastive learning serve as auxiliary tasks to improve the quality of generating a summary by the model for generating the full-text summary. That is, the model for detecting the semantic coherence of the dialogue sentences and the model for generating the sub-summary serve as auxiliary tasks to contribute to a main dialogue summary task in the training stage.

In some embodiments of the present disclosure, during the training process, the model for detecting the semantic coherence of the dialogue sentences and the model for generating the sub-summary serve as auxiliary tasks to help the model for generating the full-text summary to improve the quality of generating a summary.

In some embodiments of the present disclosure, after training is completed, these two models and their corresponding data pre-processing modules are unnecessary. When summary production is performed on a new dialogue (in Step 200 in the embodiment of Fig. 1), in the present disclosure, it is only necessary that the dialogue understanding module and the full-text summary generating module perform understanding and summary production on the dialogue.

In some embodiments of the present disclosure, the backbone network structure of the present disclosure is a transformer network, which is mainly used to understand an input text and generate a corresponding summary.

In some embodiments of the present disclosure, the transformer network structure may also be replaced by an end-to-end generation model based on RNN (Recurrent Neural Network) and CNN (Convolutional Neural Network).

In the method for generating the summary of the dialogue and the method for training a model provided by the above-described embodiments of the present disclosure, based on the idea of contrastive learning, it is provided that a switching relationship between different topics in a dialogue is modeled by learning semantic coherence of dialogue sentences, to implicitly obtain the topic segmentation information of a dialogue, and generate a summary for the dialogue of the same topic. In the method according to the above-described embodiments of the present disclosure, additional annotation information or prior algorithms is not required.

In the multi-task learning end-to-end summary generation method provided by the above-described embodiments of the present disclosure, it is possible to solve the technical problem that the pipeline method (that is, a method of first obtaining the dialogue topic information and then generating a summary according to the topic information) is present with an erroneous transfer shortcoming.

In a dialogue summary generation scenario, for the tough problems that the dialogue topic information is difficult to obtain and the annotation involves an expensive cost, in the above-described embodiments of the present disclosure, a contrastive learning mode based on the coherence of the dialogue is provided to implicitly model the topic information of the dialogue.

For different topics of dialogue content, in the above-described embodiments of the present disclosure, the concept of sub-summary is introduced and a sub-summary generation method is designed based on contrastive learning, which may effectively help the model to generate a sub-summary for the same topic of content after obtaining the topic information of the dialogue content.

In the above-described embodiments of the present disclosure, a positive and negative constructing method is used for the training data of the dialogue coherence detecting module and the sub-summary generating module.

In a multi-task learning mode joining two contrastive objective functions (that is, the objective functions of the dialogue sentence coherence detecting module and the sub-summary generating module) and the objective function of the full-text summary generating module according to the above-described embodiments of the present disclosure, it is possible to support the model to generate a dialogue summary in an end-to-end manner and avoid erroneous transfer.

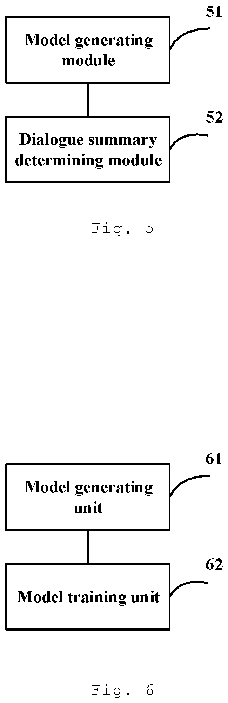

Fig. 5 is a schematic view of some embodiments of an apparatus for generating the summary of the dialogue according to the present disclosure. As shown in Fig. 5, the apparatus for generating the summary of the dialogue according to the present disclosure may comprise a model generating module 51 and a dialogue summary determining module 52.

The model generating module 51 is configured to model semantic coherence of dialogue sentences by a contrastive learning mode to determine topic information of the dialogue and generate a model for generating the summary of the dialogue.

In some embodiments of the present disclosure, the model generating module 41 may be implemented as a device for training a model of the present disclosure.

The dialogue summary determination module 52 is configured to input a target dialogue into the model for generating the summary of the dialogue to obtain the summary of the target dialogue.

In some embodiments of the present disclosure, the apparatus for generating the summary of the dialogue is configured to perform operations to implement the method for generating the summary of the dialogue according to any of the above-described embodiments.

Fig. 6 is a schematic view of some embodiments of a device for training a model according to the present disclosure. As shown in Fig. 6, the device for training a model of the present disclosure (for example, the model generating module 51 in the embodiment of Fig. 5) may comprise a model generating unit 61 and a model training unit 62.

The model generation unit 61 is configured to model semantic coherence of dialogue sentences by a contrastive learning mode to determine topic information of the dialogue and generate a model for generating a summary of the dialogue.

The model training unit 62 is configured to perform model training on the model for generating the summary of the dialogue by using an alternating parameter updating mode, so that the model for generating the summary of the dialogue outputs the summary of a target dialogue according to an input target dialogue.

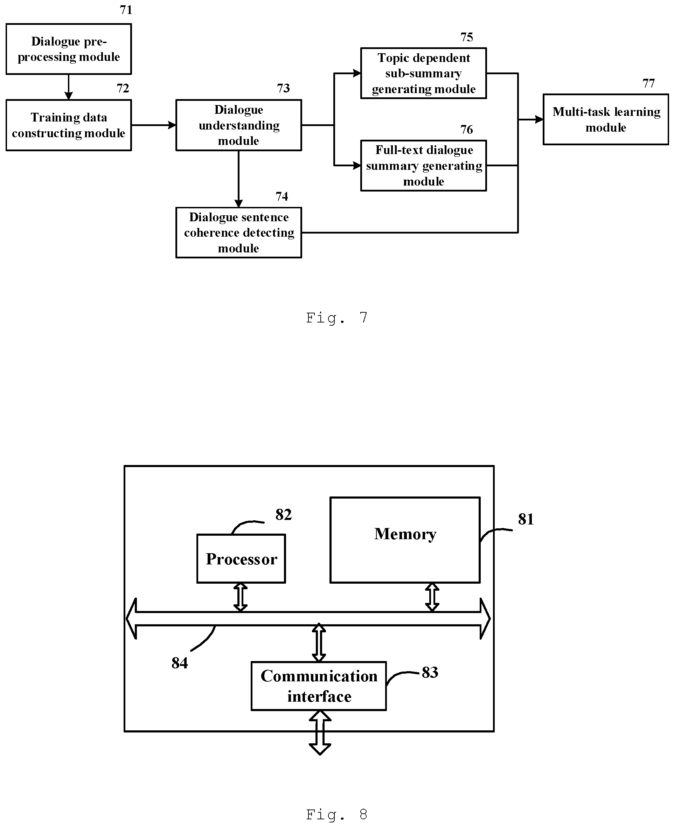

Fig. 7 is a schematic view of other embodiments of a device for training a model according to the present disclosure. As shown in Fig. 7, the device for training a model of the present disclosure (for example, the model generating module 51 in the embodiment of Fig. 5) may comprise a dialogue pre-processing module 71, a training data constructing module 72, a dialogue understanding module 73, a dialogue sentence coherence detecting module 74, a topic dependent sub-summary generating module 75, a full-text dialogue summary generating module 76 and a multi-task learning module 77.

The dialogue pre-processing module 71 is configured to pre-process a dialogue.

In some embodiments of the present disclosure, the dialogue pre-processing module 71 may be configured to add speaker information to each of speech contents of different speakers in the dialogue, and splice the speech contents of the different speakers together; and tokenize the spliced dialogue by using a tokenizer of a pre-training model, and reserve a first predetermined number of words as a model input.

The training data constructing module 72 is configured to construct the corresponding model training data according to the requirements of the model for understanding the dialogue, the model for generating the sub-summary and the model for generating the full-text summary.

In some embodiments of the present disclosure, the training data constructing module 72 may be configured to take a window constructed according to consecutive dialogue sentences in the dialogue as positive model training data, and taking data obtained by scrambling and splicing again dialogue sentences in window content as negative model training data, for the model for understanding the dialogue; generate corresponding positive model training data and negative model training data according to each topic of the dialogue, for the model for generating the sub-summary; and take all content of the dialogue as a model input, and taking a complete summary as a model output, for the model for generating the full-text summary.

The dialogue understanding module 73 is configured to construct the model for understanding the dialogue to semantically encode the dialogue and train the model for understanding the dialogue.

The dialogue sentence coherence detecting module 74 is configured to construct a model for detecting the semantic coherence of the dialogue sentences, to model a switching relationship between different topics in the dialogue by learning the semantic coherence of dialogue sentences to obtain topic segmentation information of the dialogue.

In some embodiments of the present disclosure, dialogue sentence coherence detecting module 74 may be configured to calculate coherence scores of the positive model training data and the negative model training data of the mode for detecting the coherence of the dialogue sentences respectively; randomly select a second predetermined number of predetermined positive and negative pairs, and calculating a coherence loss based on contrastive learning in a training stage; and calculate an objective function of the mode for detecting the coherence of the dialogue sentences according to an edge contrastive loss.

The topic dependent sub-summary generating module 75 is configured to construct the model for generating the sub-summary, to generate the sub-summary corresponding to each of the topics of the dialogue.

In some embodiments of the present disclosure, the topic dependent sub-summary generating module 75 may be configured to model a sub-summary generation task as a sequence-to-sequence learning problem; determine the degree of irrelevance between a dialogue segment and a sub-summary in the sub-summary generation task; randomly select a third predetermined number of predetermined positive and negative pairs for training in a training stage; and determine an objective function of the model for generating the sub-summary according to a marginal loss function based on contrastive learning.

The full-text dialogue summary generating module 76 is configured to construct the model for generating the full-text summary, to generate a summary of full-text of the dialogue.

In some embodiments of the present disclosure, the full-text dialogue summary generating module 76 may be configured to model a full-text summary generation task as a sequence-to-sequence learning problem; set a training goal of the model for generating the full-text summary to learn an optimal model parameter and minimize a negative logarithmic likelihood function value; and determine an objective function of the model for generating the full-text summary.

The multi-task learning module 77 is configured to perform model training on model for detecting the semantic coherence of the dialogue sentences, the model for generating the sub-summary and the model for generating the full-text summary by using an alternating parameter updating mode.

In some embodiments of the present disclosure, the multi-task learning module 77 may be configured to sequentially update parameters by using an objective function of the model for detecting the semantic coherence of the dialogue sentences, an objective function of the model for generating the sub-summary and an objective function of the model for generating the full-text summary, to train the model for detecting the semantic coherence of the dialogue sentences, the model for generating the sub-summary and the model for generating the full-text summary in a training process; and take the model for detecting the semantic coherence of the dialogue sentences and the model for generating the sub-summary as auxiliary tasks to improve the quality of generating the summary by the model for generating the full-text summary in the training process.

In some embodiments of the present disclosure, the device for training a dialogue model is configured to perform the method for training the model according to any of the above-described embodiments.

In the apparatus for generating the summary of the dialogue and the device for training the model provided by the above-described embodiments of the present disclosure, based on the idea of contrastive learning, it is provided to model a switching relationship between different topics in a dialogue by learning semantic coherence, to implicitly obtain the topic segmentation information of a dialogue, and generate a summary for a dialogue of the same topic. In the apparatus for generating the summary of the dialogue according to the above-described embodiments of the present disclosure, additional annotation information or prior algorithms is not required.

In the multi-task learning end-to-end summary generation method provided by the above-described embodiments of the present disclosure, it is possible to solve the technical problem that the pipeline method (that is, a method of first obtaining the dialogue topic information and then generating a summary according to the topic information) is present with an erroneous transfer shortcoming.

Fig. 8 is a schematic structural view of some embodiments of a computer device according to the present disclosure. As shown in Fig. 8, the computer device comprises a memory 81 and a processor 82.

The memory 81 is configured to store instructions, and the processor 82 is coupled to the memory 81. The processor 82 is configured to perform the method for generating the summary of the dialogue according to the above-described embodiments and/or the method for training a model according to any of the above-described embodiments based on the instructions stored in the memory.

As shown in Fig. 8, the computer device also comprises a communication interface 83 for information interaction with other devices. At the same time, the computer device also comprises a bus 84, through which the processor 82, the communication interface 83 and the memory 81 communicate with each other.

The memory 81 may comprise a high-speed RAM memory, and may also comprise a non-volatile memory, for example, at least one disk memory. The memory 81 may also be a memory array. The memory 81 may also be partitioned into blocks, which may be combined into a virtual volume according to certain rules.

Further, the processor 82 may be a central processing unit CPU, or may be an application specific integrated circuit (ASIC), or one or more integrated circuits configured to implement the embodiments of the present disclosure.

In a dialogue summary generation scenario, for the tough problems that the dialogue topic information is difficult to obtain and the annotation involves an expensive cost, in the above-described embodiments of the present disclosure, a contrastive learning mode based on the coherence of a dialogue is provided to implicitly model the topic information of a dialogue.

For different topics of dialogue, in the above-described embodiments of the present disclosure, the concept of sub-summary is introduced and a sub-summary generation method is designed based on contrastive learning, which may effectively help the model to generate a sub-summary for the same topic of content after obtaining the topic information of a dialogue.

In the above-described embodiments of the present disclosure, a positive and negative constructing method is used for the training data of the dialogue coherence detecting module and the sub-summary generating module.

In a multi-task learning mode joining two contrastive objective functions (that is, the objective functions of the dialogue sentence coherence detecting module and the sub-summary generating module) and the objective function of the full-text summary generating module according to the above-described embodiments of the present disclosure, it is possible to support the model to generate a dialogue summary in an end-to-end manner and avoid erroneous transfer.

According to another aspect of the present disclosure, a non-transitory computer readable storage medium is provided, wherein the computer readable storage medium stores computer instructions that, when executed by a processor, implement the method for generating the summary of the dialogue according to any of the above-described embodiments and/or a method for training a model according to any of the above-described embodiments.

Those skilled in the art will appreciate that the embodiments of the present disclosure may be provided as a method, device, or computer program product. Accordingly, the present disclosure may take the form of an entirely hardware embodiment, an entirely software embodiment, or a combination of software and hardware aspects. Moreover, the present disclosure may take the form of a computer program product embodied in one or more computer-usable non-transitory storage media (comprising but not limited to a disk memory, CD-ROM, an optical memory, and the like) containing computer usable program codes therein.

The present disclosure is described with reference to the flow charts and/or block views of the methods, devices (systems), and computer program products according to the embodiments of the present disclosure. It will be understood that each step and/or block of the flow charts and/or block views as well as a combination of steps and/or blocks of the flow charts and/or block views may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more steps of a flow chart and/or one or more blocks in a block view.

These computer program instructions may also be stored in a computer readable memory that may guide a computer or other programmable data processing device to operate in a particular manner, such that the instructions stored in the computer readable memory produce a manufacture comprising an instruction device. The instruction device realizes a function designated in one or more steps in a flow chart or one or more blocks in a block view.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more steps of the flow chart and/or one or more blocks in the block view.

The apparatus for generating the summary of the dialogue described above may be implemented as a general purpose processor, a programmable logic controller (PLC), a digital signal processor (DSP), an application specific integrated circuit (ASIC), a field-programmable gate array (FPGA) or other programmable logic devices, discrete gates or transistor logic devices, discrete hardware assemblies or any proper combination thereof, which is configured to perform the functions described in the present application.

Hitherto, the present disclosure has been described in detail. Some details well known in the art are not described in order to avoid obscuring the concept of the present disclosure. According to the above description, those skilled in the art would fully understand how to implement the technical solutions disclosed here.

Those of ordinary skill in the art may understand that all or some of the steps in the above-described embodiments may be accomplished by hardware, or by programs to instruct relevant hardware. The programs may be stored in a non-transitory computer-readable storage medium. The storage medium as mentioned above may be read-only memory, magnetic disk or optical disk, and the like.

Descriptions of the present disclosure, which are made for purpose of exemplification and description, are not absent with omissions or limit the present disclosure to the forms as disclosed. Many modifications and variations are apparent for those skilled in the art. The embodiments are selected and described in order to better explain the principles and actual application of the present disclosure, and enable those skilled in the art to understand the present disclosure to design various embodiments adapted to particular purposes and comprising various modifications.

**Claims**

1. A method for generating a summary of a dialogue, comprising:

   modeling semantic coherence of dialogue sentences by a contrastive learning mode to determine topic information of the dialogue and generate a model for generating the summary of the dialogue; and
   inputting a target dialogue into the model for generating the summary of the dialogue to obtain the summary of the target dialogue.

2. The method according to claim 1, wherein the modeling the semantic coherence of dialogue sentences by the contrastive learning mode to determine the topic information of the dialogue and generate the model for generating the summary of the dialogue, comprises:

   constructing a model for detecting the semantic coherence of the dialogue sentences, to model a switching relationship between different topics in the dialogue by learning the semantic coherence of dialogue sentences to obtain topic segmentation information of the dialogue;
   constructing a model for generating a sub-summary, to generate a sub-summary corresponding to each of topics of the dialogue; and
   constructing a model for generating a full-text summary, to generate a summary of full-text of the dialogue.

3. The method according to claim 2, wherein the modeling the semantic coherence of dialogue sentences by the contrastive learning mode to determine the topic information of the dialogue and generate the model for generating the summary of the dialogue, further comprises:
   performing model training on the model for detecting the semantic coherence of the dialogue sentences, the model for generating the sub-summary and the model for generating the full-text summary by using an alternating parameter updating mode.

4. The method according to claim 3, wherein the performing model training on the model for detecting the semantic coherence of the dialogue sentences, the model for generating the sub-summary and the model for generating the full-text summary by using an alternating parameter updating mode, comprises:

   sequentially updating parameters by using an objective function of the model for detecting the semantic coherence of the dialogue sentences, an objective function of the model for generating the sub-summary and an objective function of the model for generating the full-text summary, to train the model for detecting the semantic coherence of the dialogue sentences, the model for generating the sub-summary and the model for generating the full-text summary in a training process; and
   taking the model for detecting the semantic coherence of the dialogue sentences and the model for generating the sub-summary as auxiliary tasks to improve the quality of generating the summary by the model for generating the full-text summary in the training process.

5. The method according to any of claims 2 to 4, wherein the modeling the semantic coherence of dialogue sentences by the contrastive learning mode to determine the topic information of the dialogue and generate the model for generating the summary of the dialogue, further comprises:

pre-processing the dialogue;

constructing corresponding model training data according to requirements of a model for understanding the dialogue, the model for generating the sub-summary and the model for generating the full-text summary; and constructing the model for understanding the dialogue, to semantically encode the dialogue, and training the model for understanding the dialogue.

6. The method according to claim 5, wherein the pre-processing the dialogue, comprises:

adding speaker information to each of speech contents of different speakers in the dialogue, and splicing the speech contents of the different speakers together; and tokenizing the spliced dialogue by using a tokenizer of a pre-training model, and reserving a first predetermined number of words as a model input.

7. The method according to claim 5, wherein the constructing the corresponding model training data according to the requirements of the model for understanding the dialogue, the model for generating the sub-summary and the model for generating the full-text summary, comprises:

taking a window constructed according to consecutive dialogue sentences in the dialogue as positive model training data, and taking data obtained by scrambling and splicing again dialogue sentences in window content as negative model training data, for the model for understanding the dialogue; generating corresponding positive model training data and negative model training data according to each topic of the dialogue, for the model for generating the sub-summary; and taking all content of the dialogue as a model input, and taking a complete summary as a model output, for the model for generating the full-text summary.

8. The method according to claim 6, wherein the constructing the mode for detecting the coherence of the dialogue sentences, to model a switching relationship between different topics in the dialogue by learning the semantic coherence of dialogue sentences to obtain topic segmentation information of the dialogue, comprises:

calculating coherence scores of the positive model training data and the negative model training data of the mode for detecting the coherence of the dialogue sentences respectively; randomly selecting a second predetermined number of predetermined positive and negative pairs, and calculating a coherence loss based on contrastive learning in a training stage; and calculating an objective function of the mode for detecting the coherence of the dialogue sentences according to an edge contrastive loss.

9. The method according to claim 6, wherein the constructing the model for generating the sub-summary, to generate the sub-summary corresponding to each of the topics of the dialogue, comprises:

modeling a sub-summary generation task as a sequence-to-sequence learning problem; determining the degree of irrelevance between a dialogue segment and a sub-summary in the sub-summary generation task; randomly selecting a third predetermined number of predetermined positive and negative pairs for training in a training stage; and determining an objective function of the model for generating the sub-summary according to a marginal loss function based on contrastive learning.

10. The method according to claim 6, wherein the constructing a model for generating a full-text summary, to generate the summary of the full-text of the dialogue, comprises:

modeling a full-text summary generation task as a sequence-to-sequence learning problem; setting a training goal of the model for generating the full-text summary to learn an optimal model parameter and minimize a negative logarithmic likelihood function value; and determining an objective function of the model for generating the full-text summary.

11. A method for training a model, comprising:

modeling semantic coherence of dialogue sentences by a contrastive learning mode to determine topic information of the dialogue and generate a model for generating a summary of the dialogue; and
performing model training on the model for generating the summary of the dialogue by using an alternating parameter updating mode, so that the model for generating the summary of the dialogue outputs the summary of a target dialogue according to an input target dialogue.

12. The method according to claim 11, wherein the modeling the semantic coherence of dialogue sentences by the contrastive learning mode to determine the topic information of the dialogue and generate the model for generating the summary of the dialogue, comprises:

constructing a model for detecting the semantic coherence of the dialogue sentences, to model a switching relationship between different topics in the dialogue by learning the semantic coherence of dialogue sentences to obtain topic segmentation information of the dialogue;
constructing a model for generating a sub-summary, to generate a sub-summary corresponding to each of topics of the dialogue; and
constructing a model for generating a full-text summary, to generate a summary of full-text of the dialogue.

13. The method according to claim 12, wherein the performing model training on the model for generating the summary of the dialogue by using an alternating parameter updating mode, comprises:

sequentially updating parameters by using an objective function of the model for detecting the semantic coherence of the dialogue sentences, an objective function of the model for generating the sub-summary and an objective function of the model for generating the full-text summary, to train the model for generating the summary of the dialogue, wherein the model for generating the summary of the dialogue comprises the model for detecting the semantic coherence of the dialogue sentences, the model for generating the sub-summary and the model for generating the full-text summary in a training process; and
taking the model for detecting the semantic coherence of the dialogue sentences and the model for generating the sub-summary as auxiliary tasks to improve the quality of generating the summary by the model for generating the full-text summary in the training process.

14. The method according to claim 12 or 13, wherein the modeling the semantic coherence of dialogue sentences by the contrastive learning mode to determine the topic information of the dialogue and generate the model for generating the summary of the dialogue, further comprises:

pre-processing the dialogue;
constructing corresponding model training data according to requirements of a model for understanding the dialogue, the model for generating the sub-summary and the model for generating the full-text summary; and
constructing the model for understanding the dialogue, to semantically encode the dialogue, and training the model for understanding the dialogue.

15. The method according to claim 14, wherein the pre-processing the dialogue, comprises:

adding speaker information to each of speech contents of different speakers in the dialogue, and splicing the speech contents of the different speakers together; and
tokenizing the spliced dialogue by using a tokenizer of a pre-training model, and reserving a first predetermined number of words as a model input.

16. The method according to claim 14, wherein the constructing the corresponding model training data according to the requirements of the model for understanding the dialogue, the model for generating the sub-summary and the model for generating the full-text summary, comprises:

taking a window constructed according to consecutive dialogue sentences in the dialogue as positive model training data, and taking data obtained by scrambling and splicing again dialogue sentences in window content as negative model training data, for the model for understanding the dialogue;
generating corresponding positive model training data and negative model training data according to each topic of the dialogue, for the model for generating the sub-summary; and
taking all content of the dialogue as a model input, and taking a complete summary as a model output, for the model for generating the full-text summary.

**EP 4 506 851 A1**

17. The method according to claim 15, wherein the constructing the mode for detecting the coherence of the dialogue sentences, to model a switching relationship between different topics in the dialogue by learning the semantic coherence of dialogue sentences to obtain topic segmentation information of the dialogue, comprises:

calculating coherence scores of the positive model training data and the negative model training data of the mode for detecting the coherence of the dialogue sentences respectively;
randomly selecting a second predetermined number of predetermined positive and negative pairs, and calculating a coherence loss based on contrastive learning in a training stage; and
calculating an objective function of the mode for detecting the coherence of the dialogue sentences according to an edge contrastive loss.

18. The method according to claim 15, wherein the constructing the model for generating the sub-summary, to generate the sub-summary corresponding to each of the topics of the dialogue, comprises:

modeling a sub-summary generation task as a sequence-to-sequence learning problem;
determining the degree of irrelevance between a dialogue segment and a sub-summary in the sub-summary generation task;
randomly selecting a third predetermined number of predetermined positive and negative pairs for training in a training stage; and
determining an objective function of the model for generating the sub-summary according to a marginal loss function based on contrastive learning.

19. The method according to claim 15, wherein the constructing the model for generating the full-text summary, to generate the summary of the full-text of the dialogue, comprises:

modeling a full-text summary generation task as a sequence-to-sequence learning problem;
setting a training goal of the model for generating the full-text summary to learn an optimal model parameter and minimize a negative logarithmic likelihood function value; and
determining an objective function of the model for generating the full-text summary.

20. An apparatus for generating a summary of a dialogue, comprising:

a model generating module configured to model semantic coherence of dialogue sentences by a contrastive learning mode to determine topic information of the dialogue and generate a model for generating the summary of the dialogue; and
a dialogue summary determination module configured to input a target dialogue into the model for generating the summary of the dialogue to obtain the summary of the target dialogue.

21. The apparatus for generating the summary of the dialogue according to claim 20, wherein the apparatus for generating the summary of the dialogue is configured to perform the method according to any of claims 1 to 10.

22. A device for training a model, comprising:

a model generation unit configured to model semantic coherence of dialogue sentences by a contrastive learning mode to determine topic information of the dialogue and generate a model for generating a summary of the dialogue; and
a model training unit configured to perform model training on the model for generating the summary of the dialogue by using an alternating parameter updating mode, so that the model for generating the summary of the dialogue outputs the summary of a target dialogue according to an input target dialogue.

23. The device according to claim 22, wherein the device is configured to perform the method according to any of claims 11 to 19.

24. A computer device comprising:

a memory configured to store instructions; and
a processor configured to execute the instructions, so that the computer device performs the method according to any of claims 1 to 10 and/or the method according to any of claims 11 to 19.

17

25. A non-transitory computer-readable storage medium, wherein the non-transitory computer-readable storage medium has computer instructions stored thereon that, when executed by a processor, implement the method according to any of claims 1 to 10 and/or the method according to any of claims 11 to 19.

Modeling semantic coherence of the dialogue sentences by a contrastive learning mode to determine topic information of the dialogue and generate a model for generating a summary of the dialogue

100

Inputting a target dialogue into the model for generating the summary of the dialogue to obtain the summary of the target dialogue

200

Fig. 1

Julia: Where are you?

Hania: That's a good question, haha

. . . . . .

Hania: Don't even tell me, I have been on the road for 3 hours already

$S_1$

Julia: I know how you feel love, I am sick of trains already :(

Hania: I will be there around 7pm I guess :(

$S_4$

Julia: I will be waiting! :*

$S_2$

Hania: Great!

Julia: You must be starving, I am gonna make some food. What would you like?

$S_5$

. . . . . .

Hania: Or actually maybe we will order some takeaway?

Julia: Sounds like a plan :) pizza or burgers?

Hania: Pizza always :D

$S_3$

. . . . . .

$(t_1)$ Hania has been traveling for 3 hours already. $(t_2)$ She will get there around 7pm. $(t_3)$ Julia will order takeaway pizza for her.

Fig. 2

| Modeling semantic coherence of the dialogue sentences by a contrastive learning mode to determine topic information of the dialogue and generate a model for generating a summary of the dialogue | 101 |

| Performing model training on the model for generating the summary of the dialogue by using an alternating parameter updating mode, so that the model for generating the summary of the dialogue outputs the summary of a target dialogue according to an input target dialogue | 102 |

Fig. 3

| Pre-processing the dialogue | 110 |

↓

| Constructing corresponding model training data according to requirements of a model for understanding the dialogue, the model for generating the sub-summary and the model for generating the full-text summary | 120 |

↓

| Constructing the model for understanding the dialogue, to semantically encode the dialogue, and training the model for understanding the dialogue | 130 |

↓

| Constructing a model for detecting semantic coherence of dialogue sentences, to model a switching relationship between different topics in the dialogue by learning the semantic coherence of the dialogue to obtain topic segmentation information of the dialogue | 140 |

↓

| Constructing a model for generating a sub-summary, to generate a sub-summary corresponding to each of topics of the dialogue | 150 |

↓

| Constructing a model for generating a full-text summary, to generate the summary of the full-text of the dialogue | 160 |

↓

| Performing model training on the model for detecting semantic coherence of the dialogue sentences, the model for generating the sub-summary and the model for generating the full-text summary by using an alternating parameter updating mode | 170 |

Fig. 4

```
┌────────────────────────┐
│   Model generating     │  51
│        module          │ ⌐
└───────────┬────────────┘
            │
┌───────────┴────────────┐
│   Dialogue summary     │  52
│  determining module    │ ⌐
└────────────────────────┘
```

Fig. 5

```
┌────────────────────────┐
│   Model generating     │  61
│         unit           │ ⌐
└───────────┬────────────┘
            │
┌───────────┴────────────┐
│                        │  62
│  Model training unit   │ ⌐
└────────────────────────┘
```

Fig. 6

**71**

Dialogue pre-processing module

**72**

Training data constructing module

**73**

Dialogue understanding module

**75**

Topic dependent sub-summary generating module

**76**

Full-text dialogue summary generating module

**77**

Multi-task learning module

**74**

Dialogue sentence coherence detecting module

Fig. 7

**82**

Processor

Memory

**81**

**84**

Communication interface

**83**

Fig. 8

## INTERNATIONAL SEARCH REPORT

| International application No. |
| --- |
| **PCT/CN2023/084642** |

### A. CLASSIFICATION OF SUBJECT MATTER

G06F 40/35(2020.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 对话, 摘要, 对比, 学习, 语义, 连贯, 主题, 模型, conversation, abstract, contrast, study, semantic, topic, model

### C. DOCUMENTS CONSIDERED TO BE RELEVANT

| Category* | Citation of document, with indication, where appropriate, of the relevant passages | Relevant to claim No. |
| --- | --- | --- |
| X | CN 111639175 A (UNIVERSITY OF ELECTRONIC SCIENCE AND TECHNOLOGY OF CHINA) 08 September 2020 (2020-09-08) description, paragraphs [0053]-[0080] | 1, 20-21, 24-25 |
| Y | CN 111639175 A (UNIVERSITY OF ELECTRONIC SCIENCE AND TECHNOLOGY OF CHINA) 08 September 2020 (2020-09-08) description, paragraphs [0053]-[0080] | 11, 22-23 |
| Y | CN 112464658 A (SHANGHAI JIAO TONG UNIVERSITY) 09 March 2021 (2021-03-09) description, paragraphs [0058]-[0157] | 11, 22-23 |
| A | CN 111368066 A (BEIJING JINGDONG SHANGKE INFORMATION TECHNOLOGY CO., LTD. et al.) 03 July 2020 (2020-07-03) entire document | 1-25 |
| A | CN 113919367 A (INSTITUTE OF AUTOMATION, CHINESE ACADEMY OF SCIENCES) 11 January 2022 (2022-01-11) entire document | 1-25 |
| A | US 2022067269 A1 (TWILIO INC.) 03 March 2022 (2022-03-03) entire document | 1-25 |

| | |
| --- | --- |
| ☐ Further documents are listed in the continuation of Box C. | ☑ See patent family annex. |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 June 2023** | **20 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/084642**

| Patent document cited in search report | | | Publication date (day/month/year) | Patent family member(s) | | | Publication date (day/month/year) |
|---|---|---|---|---|---|---|---|
| CN | 111639175 | A | 08 September 2020 | None | | | |
| CN | 112464658 | A | 09 March 2021 | None | | | |
| CN | 111368066 | A | 03 July 2020 | None | | | |
| CN | 113919367 | A | 11 January 2022 | None | | | |
| US | 2022067269 | A1 | 03 March 2022 | US | 2022414319 | A1 | 29 December 2022 |
| | | | | US | 11475210 | B2 | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210338218